# DEMANDE DE BREVET EUROPEEN

(11) **EP 1 602 634 A2**
(43) Date de publication de la demande: **07.12.2005**
(21) Numéro de dépôt: 05291056.9
(22) Date de dépôt: 17.05.2005
(51) Int. Cl.: C04B 24/38

(54) **Utilisation de polysaccharides particulieres pour l'adjuvantation de matières minérales**

(30) Priorité: 02.06.2004 FR 0405960
(71) Demandeur: Roquette Frères, 62136 Lestrem (FR)
(72) Inventeur: Mentink, Léon, 59100 Roubaix (FR)
(74) Mandataire: Doressamy, Clarisse

(57) **Abrégé**

La présente invention a pour objet l'utilisation de polysaccharides particuliers pour l'adjuvantation de matières minérales, notamment pour l'adjuvantation de liants minéraux.

Ces polysaccharides présentent de manière caractéristique :
- une masse moléculaire moyenne en poids « MW », au moins égale à 500 g/mole et au plus égale à 9000 g/mole, notamment comprise entre 700 et 7000 g/mole, et
- un taux de branchement « BR » au moins égal à 10 %, notamment compris entre 10 et 40 %.

L'invention concerne également l'utilisation conjointe, dans les matières minérales dont notamment les liants minéraux, de ces polysaccharides particuliers d'une part et de certains autres adjuvants d'autre part, par exemple d'adjuvants, de nature saccharidique ou non, à fonctionnalité plastifiante, superplastifiante ou autre.

## Description

La présente invention a pour objet l'utilisation de polysaccharides particuliers pour l'adjuvantation de matières minérales, notamment pour l'adjuvantation de liants minéraux.

Elle concerne également l'utilisation conjointe, dans les matières minérales dont notamment les liants minéraux, de ces polysaccharides particuliers d'une part et de certains autres adjuvants d'autre part, par exemple d'adjuvants, de nature saccharidique ou non, à fonctionnalité plastifiante, superplastifiante ou autre.

La présente invention a également pour objet les matières minérales et liants minéraux ainsi adjuvantés et leur procédé de préparation.

Par « matière minérale », on entend toute composition liquide, pâteuse ou solide, comprenant une ou plusieurs matière(s) minérale(s) choisie(s)notamment parmi la silice, le quartz, le mica, les oxydes métalliques, le ciment, la chaux, la pouzzolane, les fumées de silice, les laitiers de hauts-fourneaux et d'aciéries, les cendres volantes, les kaolins, le talc, les argiles, les zéolithes, les bentonites, le charbon minéral, le carbonate de calcium, le carbonate de magnésium, le sulfate de calcium, le gypse, le noir de carbone, l'oxyde de titane, le graphite, ou les mélanges quelconques de ces matières minérales. Cette matière minérale peut, à titre d'exemples, consister en une dispersion de pigments ou de charges, un fluide de forage, un sable de fonderie, un ciment, un mortier, un béton, un enduit, un plâtre, une composition absorbante à base d'argile, une céramique, une brique, une tuile, un pneu, un boulet combustible, un bitume, une colle chargée ou une peinture.

De manière avantageuse ladite matière minérale consiste en un liant minéral.

Par « liant minéral », on entend en premier lieu tout liant hydraulique et plus particulièrement toute composition, notamment toute poudre minérale, apte à former avec l'eau une pâte faisant prise et durcissant progressivement, même à l'abri de l'air. Classiquement, à température ambiante, un liant minéral commence à former avec l'eau une telle pâte dans un délai d'environ quelques minutes à moins de 48 heures, généralement entre environ 30 minutes et 24 heures.

Cette définition s'applique et ce, sans que cette liste ne soit limitative :
- aux ciments, et en particulier à ceux appartenant au groupe comprenant les ciments de type Portland artificiel, les ciments de type Portland composé, les ciments de haut fourneau, les ciments de laitier au clinker, les ciments au laitier et aux cendres volantes, ainsi que des ciments broyés d'usages plus particuliers de type ciment de laitier à la chaux, ciment à maçonner, ciment naturel, ciment sursulfaté, ciment à durcissement rapide, ciment à prise et durcissement rapides, ciment pour travaux en eaux à faibles ou fortes teneurs en sulfates,
- aux chaux hydrauliques naturelles ou artificielles,
- aux mélanges tels que mortiers, coulis, enduits et bétons, à base de ciment et/ou de chaux, d'eau et/ou de granulats de toutes granulométries (sables, graviers, cailloux,...), en particulier ceux appartenant au groupe comprenant les mortiers industriels secs prémélangés, les mortiers préparés sur chantiers, les mortiers industriels secs prédosés, les mortiers prêts à l'emploi, les mortiers fluides, les mortiers d'injection, les coulis et coulis d'injection, les bétons armés ou non, les bétons auto-plaçants et auto-nivellants, les bétons « hautes performances », « très hautes performances » et « ultra hautes performances », les bétons lourds, les bétons légers, les bétons isolants légers, les bétons cellulaires, les bétons de fibres, les bétons précontraints et les bétons apparents.

Cette définition inclut également les matières premières entrant dans la fabrication des ciments tels que pouzzolanes, clinkers, laitiers, fillers calcaires et fumées de silice et les composants desdites matières premières.

Par « liant minéral », on entend également les liants non hydrauliques, en particulier les matières à base de sulfate de calcium, de gypse et/ou de chaux.

Les matières minérales précitées et d'autres sont également utilisables comme matières dans le domaine des industries de la chimie, des colles et adhésifs, des encres et peintures, du papier et du carton, des détergents, des matières plastiques, des produits textiles, des agglomérés, combustibles ou non, de la métallurgie, du forage, des produits phytosanitaires, des produits pharmaceutiques et cosmétologiques...

En fonction de l'utilisation finale de ces matières mais également des conditions précises dans lesquelles elles seront stockées, transportées et/ou mises en oeuvre, il est souvent nécessaire d'y incorporer des adjuvants spécifiques en vue d'en améliorer ou de leur conférer une ou plusieurs caractéristiques particulières telles que maniabilité, stabilité au stockage, biodégradabilité, pouvoir fluidifiant, lubrifiant, collant, filmogène, liant, suspensif, dispersif, pouvoir d'hydratation ou de siccité et/ou autres caractéristiques liées à des contraintes d'ordre technique, économique et ou réglementaire.

A titre d'exemples d'adjuvants de liants minéraux, on peut citer les agents de mouture ou auxiliaires de broyage, les plastifiants, les réducteurs d'eau-plastifiants, les super-plastifiants, les accélérateurs de prise et de durcissement, les retardateurs de prise, les entraîneurs d'air, les hydrofuges de masse et les produits de cure. Ces adjuvants permettent par exemple de modifier la maniabilité, la prise, le durcissement, la résistance, la durabilité et/ou certaines autres propriétés du liant minéral.

De nombreux produits plastifiants-réducteurs d'eau ou super-plastifiants, de nature saccharidique ou non, sont déjà utilisés. A titre d'exemples, on peut citer :
- les mélasses, issues des betteraves et de la canne à sucre, qui sont des produits peu coûteux, fermentescibles et d'une efficacité limitée,
- les lignosulfonates bruts, issus de l'industrie papetière, peu coûteux, mais qui présentent les inconvénients d'apporter des sels sous forme de chlorures alcalins, généralement non souhaités par les utilisateurs, et de provoquer un moussage des mortiers ou des bétons diminuant ainsi leur résistance à 28 jours,
- les sucres issus de l'amidon (glucose, maltose et hydrolysats d'amidon en contenant tels que les maltodextrines et sirops de glucose), qui sont de bons plastifiants réducteurs d'eau généralement dépourvus de sels alcalins mais fortement retardateurs de prise,
- les sucres oxydés comme les gluconates de métaux alcalins (de sodium notamment) et les hydrolysats d'amidon oxydés en contenant, qui sont de très bons plastifiants réducteurs d'eau, retardateurs de prise, qui permettent également d'améliorer la résistance à 28 jours mais qui sont des sources d'ions alcalins (de sodium en particulier),
- les sucres hydrogénés tels que le sorbitol, le maltitol et les hydrolysats d'amidon hydrogénés en contenant qui sont des plastifiants réducteurs d'eau mais qui sont cependant nettement moins retardateurs que les sucres oxydés tout en étant améliorateurs de résistance à 28 jours,
- les condensats de naphtalène formaldéhyde sulfonés et les condensats de mélamine formaldéhyde sulfonés, qui sont de très bons plastifiants, peu retardateurs de prise mais qui n'apportent cependant pas d'amélioration de la résistance à 28 jours et qui sont peu écologiques,
- les polyacrylates et les copolymères du styrène et de l'anhydride maléïque qui sont des super-plastifiants faiblement retardateurs de prise qui sont d'un coût élevé, sont faiblement biodégradables et qui n'améliorent cependant pas ou peu la résistance à 28 jours,

Comme on le voit, en ce qui concerne le domaine particulier des liants minéraux, l'industrie est notamment à la recherche de plastifiants réducteurs d'eau ou de super-plastifiants qui soient écologiques et qui confèrent à la fois une très bonne plasticité pendant un temps suffisant, peu de retard de prise et des résistances conformes aux exigences de la technique.

Cependant, l'intérêt technico-économique de tels produits hypothétiques implique qu'ils soient par ailleurs :
a) utilisables pour le maximum de fonctionnalités et/ou pour le maximum de domaines applicatifs dans le domaine général des matières minérales, y compris pour des conditions de pH ou de température très variées,
b) aisément utilisables, mais aussi stables, stockables, transportables et miscibles aux autres adjuvants de matières minérales et ce, tant à l'état sec qu'à l'état liquide, y compris dans des compositions liquides à hautes matières sèches (« MS »),
c) adaptés au maximum de contraintes réglementaires, actuelles ou futures, y compris en termes de protection de l'homme et de l'environnement,
d) susceptibles d'être obtenus selon des procédés relativement simples et peu coûteux.

Il existe donc un besoin de disposer d'un adjuvant d'origine naturelle, de coût peu élevé, apte à être avantageusement utilisé 1) dans le domaine général des matières minérales et notamment 2) dans le domaine particulier des liants minéraux, en particulier comme agent (super)plastifiant, seul ou en mélange avec d'autres produits.

Et le mérite de la Société Demanderesse est d'avoir trouvé qu'un tel adjuvant pouvait consister en ou contenir un polysaccharide doublement sélectionné par son poids moléculaire et par son taux de branchement.

De manière plus précise, la présente invention a pour objet l'utilisation, pour l'adjuvantation de matières minérales, d'un polysaccharide caractérisé par :
- une masse moléculaire moyenne en poids « MW », au moins égale à 500 g/mole et au plus égale à 9000 g/mole, notamment comprise entre 700 et 7000 g/mole et,
- un taux de branchement « BR » au moins égal à 10 %, notamment compris entre 10 et 40 %.

La masse moléculaire moyenne en poids « MW » dudit polysaccharide, exprimée en g/mole, est mesurée par chromatographie d'exclusion stérique avec calibration à l'aide de pullulanes de masses moléculaires connues.

Son taux de branchement « BR », exprimé en %, correspond ici au rapport entre le pourcentage de liaisons glucosidiques 1-6 dudit polysaccharide et le pourcentage cumulé de liaisons glucosidiques 1-6 et de liaisons 1-4 dudit polysaccharide.

Ces pourcentages de liaisons glucosidiques sont mesurés par analyse en RMN du proton à 60°C en solution dans D₂O.

Selon une variante préférentielle, ledit polysaccharide ainsi sélectionné présente :
- une masse moléculaire moyenne en poids « MW », comprise entre 1000 et 6000 g/mole, et
- un taux de branchement « BR » compris entre 12 et 30 %.

De manière particulièrement avantageuse, le polysaccharide utilisé conformément à la présente invention présente :
- une masse moléculaire moyenne en poids « MW », comprise entre 1500 et 5500 g/mole, et/ou
- un taux de branchement « BR » compris entre 15 et 25 %.

Selon un autre mode de l'invention, on met en oeuvre un polysaccharidique tel que sélectionné selon l'une quelconque des variantes sus-mentionnées, présentant, en outre, un indice de polymolécularité « IP » au plus égal à 4, de préférence compris entre 1,5 et 4, ledit indice de polymolécularité correspondant au rapport entre la masse moléculaire moyenne en poids « MW » précitée dudit polysaccharide et la masse moléculaire moyenne en nombre « MN » du même polysaccharide.

La masse moléculaire moyenne en nombre « MN », exprimée également en g/mole, est mesurée selon selon la même méthode que la masse moléculaire en poids « MW ».

L'indice de polymolécularité IP peut notamment se situer dans une gamme relativement resserrée, à savoir entre 2 et 4 et notamment entre 2,5 et 4.

Le polysaccharide utilisable selon l'invention peut être obtenu par tout moyen ou toute combinaison de moyens, apte à lui conférer les caractéristiques sélectionnées de « MW », « BR » et, éventuellement, de « IP » mentionnées ci-avant.

Ce produit peut notamment être obtenu à partir de tout polysaccharide extrait de plantes et notamment de tout polymère de glucose et/ou fructose, par exemple d'amidon ou d'inuline, extrait de céréales (dont tous génotypes de blé, maïs, riz, sorgho, orge...), de légumineuses (dont tous génotypes de pois, fève, féverole,...), de solanacées (dont tous génotypes de pomme de terre), d'euphorbiacées (dont tous génotypes de manioc) ou de composées (dont tous génotypes de chicorée).

Le polysaccharide utilisable selon l'invention peut, par exemple, être obtenu selon les enseignements généraux ou particuliers du brevet EP 1 006 128 publié au nom de la Demanderesse, en particulier selon les enseignements des paragraphes [0037] à [0059] dudit brevet, l'homme de l'art adaptant au besoin lesdits enseignements en vue d'obtenir les caractéristiques ici souhaitées de « MW », « BR » et, éventuellement de « IP ».

Le polysaccharide ainsi sélectionné peut, en vue de l'adjuvantation de matières minérales et notamment de liants minéraux, être utilisé sous forme purifiée ou non, concentrée ou non, hydrogénée ou non, et notamment après avoir subi, ou non, l'une des étapes de purification/décoloration/concentration, de fractionnement moléculaire, d'élimination du glucose et/ou d'hydrogénation décrites dans ledit brevet EP 1 006 128.

Ce polysaccharide ainsi sélectionné peut, par ailleurs, être modifié ensuite chimiquement, par exemple par greffage de chaînes grasses, par alkylation à l'aide d'oxyde d'éthylène ou de propylène, par sulfonation ou sulfatation.

Ce polysaccharide peut être mis en oeuvre sous forme solide, par exemple d'une poudre s'écoulant librement, ou sous forme liquide, par exemple de solutions présentant des matières sèches (MS) comprises entre 15 et 80 %, de préférence entre 20 et 70 %.

L'un des intérêts technico-économiques des polysaccharides particuliers selon l'invention est d'ailleurs de pouvoir être préparés, stockés, transportés, mélangés et utilisés sous des formes liquides présentant de hautes MS (au moins égales à 60 %, voire 70 % ou plus) tout en restant parfaitement stables et pompables.

La Société Demanderesse a trouvé que les polysaccharides particuliers selon l'une quelconque des variantes susdécrites pouvaient avantageusement être utilisés pour l'adjuvantation de liants minéraux et ce, de manière significativement plus efficace que, entre autres :
- d'une part, les maltodextrines, i.e. des produits issus de la seule hydrolyse par voie enzymatique ou acide de l'amidon, présentant des masses moléculaires moyennes en poids « MW » pouvant être similaires à celles desdits polysaccharides particuliers mais de structure essentiellement linéaire présentant donc des taux de branchement « BR » significativement plus bas, généralement compris entre 3 et 7 % et des indices de polymolécularité « IP » significativement plus élevés, généralement compris entre 4 et 9.
- d'autre part, les dextrines appelées aussi pyrodextrines, i.e. des produits issus de l'hydrolyse acide et de la conversion (repolymérisation, transglucosidation), en milieu très peu hydraté (au maximum 5 % d'eau), de l'amidon, présentant des taux de branchement « BR » pouvant atteindre ou dépasser 10 %, le plus souvent compris entre 4 et 9 %, mais des masses moléculaires moyennes en poids « MW » de l'ordre de 10 000 à 60 000 g/mole et donc significativement plus élevées que ceux desdits polysaccharides particuliers ainsi que des indices de polymolécularité « IP » également plus élevés, généralement compris entre 4 et 6.

Il a notamment été constaté que les polysaccharides utilisés conformément à l'invention pouvaient, seuls ou en combinaison avec des plastifiants ou super-plastifiants classiques, améliorer les propriétés physiques de mortiers ou de bétons à l'état frais mais aussi à l'état durci.

De façon remarquable, lesdits polysaccharides permettent en particulier :
- d'améliorer, sans réduction d'eau, la plasticité immédiate et l'ouvrabilité (i.e. le maintien d'une bonne plasticité pendant un temps suffisant pour permettre une mise en place correcte) de coulis, mortiers et bétons,
- de réduire la quantité d'eau au gâchage tout en conservant une bonne ouvrabilité,
- du fait de leur important pouvoir fluidifiant, d'être combinés avantageusement, par exemple, à des super-plastifiants onéreux du marché (polycarboxylates, polyphosphonates,...) et notamment d'être incorporés dans ces produits à des taux d'incorporation très significatifs (jusqu'à 30 - 40 % en poids environ) et ce, sans altération des propriétés super-plastifiantes de ces produits,
- de réduire, de façon plus ou moins prononcée, le retard de prise que confèrent d'autres produits comme par exemple les gluconates de sodium,
- de ne pas provoquer de phénomènes de « fausse prise »,
- de limiter l'évaporation de l'eau par temps très chauds où lors d'étapes de fabrication à hautes températures et donc d'être utilisés, par exemple, dans les produits de cure pour bétons, les tuiles, les briques et les plaques de plâtre,
- de préparer des bétons spécifiques et par exemple, d'être pulvérisés sur des moules ou des coffrages de façon à ne retarder la prise qu'à la surface du béton,
- avec ou sans réduction d'eau de gâchage, d'augmenter de façon très importante les résistances mécaniques à 28 jours,
- du fait qu'ils n'apportent pas d'ions sodium ou potassium, de fabriquer des liants minéraux de durabilité améliorée dans le temps puisque limitant, lors de la phase d'hydratation, la possibilité de générer des hydroxydes de sodium ou potassium et, indirectement, des hydroxydes de calcium (ion contenu dans le ciment), ces derniers induisant au cours du temps des contraintes mécaniques puis des micro-fissures au sein du béton.
- du fait qu'ils n'apportent pas de chlorures, d'être utilisés sans inconvénient dans la fabrication de béton armé,
- d'agir favorablement sur la compacité et l'imperméabilité des bétons.

Et tous les avantages précités s'accompagnent d'un caractère biodégradable et totalement inoffensif des polysaccharides particuliers selon l'invention, lesquels ne contiennent, en particulier, ni formaldéhyde, ni composés phénoliques, ni métaux lourds.

Il en résulte que de façon très avantageuse, la présente invention a pour objet l'utilisation desdits polysaccharides particuliers pour l'adjuvantation de liants minéraux, en particulier de ciments, coulis, mortiers et bétons.

Cette utilisation peut être également caractérisée en ce que l'on utilise, simultanément ou non, aux dits polysaccharides, au moins un autre adjuvant choisi parmi les agents améliorants de résistance, les agents de mouture ou auxiliaires de broyage, les plastifiants, les réducteurs d'eau-plastifiants, les super-plastifiants, les accélérateurs de prise et de durcissement, les retardateurs de prise, les entraîneurs d'air, les hydrofuges de masse, les produits de cure et leurs mélanges quelconques.

Cette utilisation peut en particulier être caractérisée en ce qu'on utilise simultanément lesdits polysaccharides et ledit autre adjuvant, notamment par le biais d'une composition unique contenant, pour le moins, ces deux produits.

L'adjuvant utilisé, simultanément ou non aux dits polysaccharides, peut avantageusement être choisi parmi les accélérateurs de prise, les plastifiants, réducteurs d'eau ou non, les super-plastifiants, les retardateurs de prise et leurs mélanges quelconques.

Selon une autre variante, il peut avantageusement être choisi parmi les adjuvants de nature saccharidique, les adjuvants boratés, aminés, cétoniques, polyhydroxyliques, monocarboxyliques, polycarboxyliques et polyphosphoniques de nature non saccharidique et leurs mélanges quelconques, en particulier être choisi parmi les monosaccharides, éventuellement hydrogénés ou oxydés, les disaccharides éventuellement hydrogénés ou oxydés, l'acide lactique et ses sels, l'acide acétique et ses sels, la glycérine, les lignosulfonates, les éthanolamines, le borax, les polymères et copolymères à base d'acide acrylique, méthacrylique et/ou maléique et leurs sels, éthers ou esters, et/ou à base de styrène et leurs mélanges quelconques.

La présente invention a d'ailleurs pour objet un adjuvant pour matière minérale, en particulier pour liant minéral, caractérisé en ce qu'il contient :
- au moins un composant A constitué d'un polysaccharide présentant une masse moléculaire moyenne en poids « MW » au moins égale à 500 g/mole et au plus égale à 9 000 g/mole et un taux de branchement « BR » au moins égal à 10 %, notamment compris entre 10 et 40 %, et,
- au moins un composant B choisi parmi les monosaccharides, éventuellement hydrogénés ou oxydés, les disaccharides, éventuellement hydrogénés ou oxydés, l'acide lactique et ses sels, l'acide acétique et ses sels, la glycérine, les lignosulfonates, les éthanolamines, les polymères et copolymères à base d'acide acrylique, méthacrylique et/ou maléique, leurs sels, éthers ou esters, et les polymères ou copolymères à base de styrène.

Le composant A peut notamment présenter des valeurs de « MW » et de « BR », mais aussi d'indice de polymolécularité « IP », appartenant à l'une ou l'autre des gammes précédemment décrites.

Le composant B peut notamment être choisi parmi la glycérine, l'isosorbide, le sorbitol, le maltitol, les gluconates, les maltobionates, les lactates, les acétates, les lignosulfonates, les polyacrylates et les mélanges quelconques contenant au moins deux quelconques de ces produits.

Ladite composition contenant les composants A et composant B précités peut notamment se présenter sous une forme liquide présentant une MS au moins égale à 15 %, de préférence comprise entre 20 et 70 %.

La Société Demanderesse a constaté que les polysaccharides particuliers conformément à l'invention pouvaient, seuls ou en combinaison avec d'autres adjuvants de nature saccharidique ou non, être avantageusement utilisés dans le domaine particulier des liants minéraux (cf. supra) mais également, à titre d'exemples :
- dans le domaine du forage, comme agents lubrifiants et/ou agents anti-gonflement d'argiles,
- dans le domaine des tuiles et briques, comme agents plastifiants et/ou régulateurs du départ de l'eau lors de la cuisson,
- dans le domaine de la fonderie et des matériaux agglomérés ou granulés, comme agents débourrants et/ou liants,
- dans le domaine des plaques de plâtre, comme agents de protection contre la sur-cuisson de plâtre à l'interface papier/plâtre et/ou agents améliorateurs de collage,
- dans le domaine des dispersions minérales telles que colles chargées, peinture, sauces de couchage et encres et des poudres minérales (charges, pigments, céramique, noir de carbone, charbon), comme agents supensifs, dispersants et/ou anti-poussières,
- dans le domaine des compositions absorbantes à base d'argile comme agents liants et/ou plastifiants.

En suite de quoi, on dispose désormais d'un nouvel adjuvant pour matières minérales présentant, de manière remarquable, l'avantage d'être à la fois multifonctionnel, peu coûteux et écologiquement irréprochable.

La présente invention va être décrite de façon encore plus détaillée à l'aide des exemples qui suivent et qui ne sont aucunement limitatifs.

### CONDITIONS GENERALES DE TESTS SUR MORTIER NORMALISE

### Préparation d'une gâchée témoin et d'une gâchée adjuvantée, pour un rapport E/C = 0,5.

Dans le bol d'un malaxeur normalisé commercialisé par la Société PERRIER et conforme à la norme ASTM C305, on mélange pendant 30 secondes, 225 g d'eau potable et 450 g de ciment référencé 51,5 N de Lumbres (CEMI 52,5 N CP2 Colibri) à une vitesse de 140 tours/mn. Puis on ajoute 1350 g de sable normalisé (EN - 196-1) : agitation 30 secondes à 140 tours/mn puis 30 secondes à 280 tours/mn. Ensuite, on arrête l'agitation, on racle manuellement à l'aide d'une spatule la préparation projetée sur les parois et on laisse reposer. Les 3 opérations sont effectuées en 1 mn 30. De nouveau, on agite pendant 1 minute à 280 tours/mn. L'arrêt de l'agitation correspond au temps T=0.

Lors de l'adjuvantation du mortier à l'aide des produits conformes ou non à l'invention, une bonne homogénéité est assurée grâce à la dilution préalable des agents dans l'eau de gâchage.

### Mesure de l'étalement

Ces mesures sont effectuées sur une table à chocs constituée d'un plateau circulaire en acier inoxydable et d'un système marteau-enclume, contrôlé par un compteur, permettant un choc à la seconde. Chaque choc correspond à une chute de 15 mm de hauteur. Dès la fin de la gâchée préparée de la façon décrite ci-dessus, on remplit un moule tronconique en acier inoxydable de 10 mm de diamètre à la base, de 70 mm de diamètre au sommet et de 60 mm de hauteur. Le moule ainsi rempli est alors placé au milieu du plateau circulaire de la table à chocs. Puis on enlève le moule et la table à chocs est mise en marche. Après 15 secondes, on arrête la table à chocs et on calcule la moyenne E, exprimée en mm, de 6 mesures du diamètre d'étalement du mortier affaissé.

Ces mesures sont réalisées à 20°C et pour une humidité relative de 65 %.

Après chaque mesure, le mortier étalé sur le plateau de la table à chocs est replacé dans le bol du malaxeur, est laissé au repos pendant 15 minutes, puis est malaxé à une vitesse de 280 tours/mn pendant 30 secondes. Un test d'étalement est alors à nouveau effectué. Cette même opération est renouvelée jusqu'à ce que le mortier étalé présente un aspect de terre humide, forme des agrégats qui se désolidarisent et ne permettent plus de mesure correcte du diamètre.

La maniabilité d'un mortier à un moment donné T, exprimée en %, est mesurée selon deux variantes :
1) la maniabilité MT correspond au rapport de l'étalement moyen mesuré à l'instant T pour ledit mortier sur l'étalement moyen mesuré à T0 (i.e dès la fin de la gâchée) pour le mortier témoin non adjuvanté, ce rapport étant multiplié par un facteur 100.
2) la maniabilité M'T correspond au rapport de l'étalement moyen mesuré à l'instant T pour ledit mortier sur l'étalement moyen mesuré au même instant T pour le mortier témoin non adjuvanté, ce rapport étant multiplié par un facteur 100.

### Mesure des temps de prise

Pour réaliser ce test, on remplit des moules tronconiques de hauteur 40 mm, de diamètre inférieur 80 mm et de diamètre supérieur 70 mm, avec la gâchée telle que préparée précédemment. Les moules sont immergés sans être recouverts dans l'eau déminéralisée à 20°C.

Les mesures sont effectuées avec un prisomètre automatique de marque ACMEL PA 8.

La fréquence des mesures est réglable de 10 mn à 30 mn ainsi que le temps de début des mesures. 65 mesures sont effectuées sur une préparation.

Le prisomètre automatique détermine le temps de début et de fin de prise.

### EXEMPLE 1

On prépare, comme décrit précédemment, une gâchée témoin (« MORTIER T ») et différentes gâchées adjuvantées conformément (« MORTIERS A à C ») ou non (« MORTIERS T1 et T2 ») à l'invention et dans lesquelles on a introduit 0,17 % (sec/sec) de, respectivement :
- « MORTIER A » : PRODUIT A, utilisable conformément à l'invention, consistant en un polysaccharide présentant une masse moléculaire en poids MW d'environ 2700 g/mole, un taux de branchement BR d'environ 20 %, une masse moléculaire en nombre MN d'environ 680 g/mole et donc un indice de polymolécularité IP d'environ 4.
- « MORTIER B » : PRODUIT B, polysaccharide utilisable conformément à l'invention et présentant les caractéristiques suivantes : MW = 3970 g/mole ; BR = 21 % ; MN = 1130 g/mole et IP = 3,5.
- « MORTIER C » : PRODUIT C, polysaccharide utilisable conformément à l'invention et présentant les caractéristiques suivantes : MW = 3855 g/mole ; BR = 27 % ; MN = 1175 g/mole et IP = 3,3.
- « MORTIER T1 » : PRODUIT T1, non utilisable selon l'invention, consistant en une dextrine jaune présentant les caractéristiques suivantes : MW = 9605 g/mole ; BR = 11 % ; MN = 2435 g/mole et IP = 3,9.
- « MORTIER T2 » : PRODUIT T2, non utilisable selon l'invention, consistant en une maltodextrine présentant les caractéristiques suivantes : MW = 8780 g/mole ; BR = 4 % ; MN = 1110 g/mole et IP = 7,9.

Pour chacun des MORTIERS T (non adjuvanté), A à C (adjuvantés selon l'invention) et T1 - T2 (adjuvantés mais non conformément à l'invention), on mesure l'étalement E (en mm), la maniabilité MT (en %), respectivement 1 heure et 2 heures après la gâchée (ci-après respectivement M1 et M2), la maniabilité M'T (en %), respectivement 1 heure et 2 heures après la gâchée (ci-après respectivement M'1 et M'2, les début (DP), fin (FP) et temps de prise (TP = FP - DP), ces 3 dernières caractéristiques étant exprimées en heures : minutes.

Le tableau ci-dessous reprend, pour chacun desdits MORTIERS, chacun des paramètres E, M1, M2, M'1, M'2, FD, DP et TP.

| MORTIERS | E | M1 | M2 | M'1 | M'2 | DP | FP | TP |
|---|---|---|---|---|---|---|---|---|
| T | 245,8 | 83,3 | 73,7 | 100 | 100 | 4:10 | 5 :45 | 1:35 |
| T1 | 277,2 | 90,8 | 78,7 | 109 | 106,9 | 10:25 | 12:10 | 1:45 |
| T2 | 280,7 | 92,6 | 82,0 | 111,1 | 111,2 | 16 :30 | 19 :25 | 2:55 |
| A | 283,2 | 97,5 | 85,3 | 107,1 | 115,8 | 15:25 | 18:20 | 2 :55 |
| B | 291,7 | 94,5 | 83,7 | 113,4 | 113,7 | 14 :25 | 16:50 | 2 :25 |
| C | 291,5 | 95,9 | 84,4 | 115,1 | 114,6 | 14 :50 | 17 :55 | 3 :05 |

Ces résultats montrent globalement que les PRODUITS A, B et C sélectionnés conformément à l'invention sont, dans le cas présent :
- de très bons agents fluidifiants, permettant d'obtenir un étalement E supérieur à 283 mm, pouvant dépasser 290 mm ; ce que ne permet pas d'atteindre les PRODUITS T1 et T2,
- des retardateurs de prise, permettant d'obtenir des valeurs de début de prise DP intermédiaires entre celle obtenue avec le PRODUIT T1 et celle obtenue avec le produit T2
- de très bons agents améliorateurs de maniabilité encore supérieurs aux PRODUITS T1 et T2.

Des essais supplémentaires ont montré que l'introduction, au sein d'un mortier, de l'un quelconque des PRODUITS A, B ou C sélectionnés conformément à l'invention, permettait d'augmenter de façon très significative les caractéristiques de résistance à 28 jours de ce même mortier non adjuvanté.

Cette augmentation de résistance à 28 jours était, à titre d'exemple, d'environ 40 % pour le PRODUIT B alors qu'elle n'était, respectivement, que d'environ 13 % et 30 % pour les PRODUITS T1 et T2.

### EXEMPLE 2

Dans cet exemple, on étudie les performances d'un polysaccharide sélectionné selon l'invention (« PRODUIT D ») en tant que substitut partiel d'un super-plastifiant de nature non saccharidique du commerce, en l'occurrence de la composition de polyacrylates commercialisée par MBT sous la dénomination GLENIUM® 51 et désignée ci-après « POLYACRYLATE A ».

Le PRODUIT D présente les caractéristiques suivantes : MW = 2705 g/mole ; BR = 20 % ; MN = 795 g/mole et IP = 3,4.

Dans le cas présent, le mortier témoin non adjuvanté a été préparé comme décrit ci-dessus si ce n'est que le ciment utilisé était un ciment référencé « CPA 52,5 CEMI CP2 Holcim ».

Cette gâchée témoin, de rapport E/C = 0,5, présentait un étalement de 235 mm, mesuré comme décrit ci-dessus.

Le POLYACRYLATE A a tout d'abord été étudié avec un objectif de réduction d'eau de manière à obtenir un mortier adjuvanté de 0,3 % (sec/sec) dudit POLYACRYLATE A et dont l'étalement était proche de celui du mortier témoin (235 mm).

On a ainsi obtenu une gâchée de mortier adjuvanté de 0,3 % de POLYACRYLATE A présentant un étalement initial de 238 mm environ et un rapport E/C de 0,37 environ, soit une réduction d'eau d'environ 20 % par rapport au mortier témoin (E/C = 0,5).

90 minutes après la gâchée, le mortier ainsi adjuvanté présentait un étalement de 207 mm environ, soit 87 % environ de la valeur d'étalement initiale.

Dans le cadre de la présente invention, on a étudié la substitution des 0,3 % de POLYACRYLATE A par un mélange de 0,225 % de POLYACRYLATE A + 0,075 % de PRODUIT D susmentionné.

On a réussi à obtenir une gâchée de mortier présentant un étalement initial de 234 mm, très proche de celui du mortier témoin non adjuvanté et ce, avec :
- un rapport E/C de 0,4 soit une réduction d'eau de 20 % par rapport au dit témoin, et
- un étalement de 210 mm environ tel que mesuré 90 minutes après la gâchée, soit 90 % environ de la valeur initiale.

Cet exemple montre qu'un polysaccharide comme le PRODUIT D peut, par exemple, parfaitement substituer 25 % du poids d'un polyacrylate, adjuvant plus onéreux et ce, sans nuire aux performances de ce dernier. D'autres essais menés par la Demanderesse ont confirmé plus généralement que les polysaccharides sélectionnés selon l'invention étaient avantageusement utilisables en association avec des polyacrylates et/ou autres adjuvants de nature non saccharidique, notamment au sein de systèmes (super)plastifiants, eux-mêmes utilisés ou non comme réducteurs d'eau.

Les polysaccharides sélectionnés selon l'invention se sont ainsi révélés, technico-économiquement, d'excellents produits « de coupage » de nombreuses compositions de polyacrylates, par exemple mises en oeuvre dans le domaine de la préfabrication ou des bétons autonivelants.

Ces produits « de coupage » peuvent notamment substituer 2 à 40 %, en particulier 5 à 30 %, du poids (sec/sec) de superplastifiants classiques.

### EXEMPLE 3

Dans le cadre de cet exemple, on a comparé les performances des PRODUITS A et T2 susmentionnés dans le cadre de la préparation de plaques de plâtre.

Plus précisément, on a évalué l'influence, sur les performances de collage entre papier et plâtre, de la substitution, à raison de 20 % en poids (sec/sec), soit par le PRODUIT A (utilisable conformément à l'invention), soit par le PRODUIT T2 (non utilisable conformément à l'invention), de l'amidon de maïs fluidifié FLUITEX® 065 X commercialisé par la Demanderesse.

Ces performances ont été étudiées sur chacune des deux faces (1) face dite « visible » et 2) face dite « dos ») d'une plaque de plâtre(plâtre de désulfuration à base de gypse de grande pureté) recouvertes d'un papier adapté d'un grammage de 200 g/m² environ.

Pour chaque essai, le collage a été noté, à deux reprises, pour chacune des deux faces de la plaque et ce, selon le barème suivant (échelle de 1 à 5) :
- 0: pas de collage
- 1: très faible collage
- 2: collage faible
- 3: collage moyen
- 4: collage fort
- 5: collage très fort

Les notes ci-dessous ont été obtenues respectivement pour l'ADJUVANT T1 (uniquement à base d'amidon FLUITEX® 065 X), pour l'ADJUVANT T2 (20 % dudit amidon remplacé par le PRODUIT T2) et pour la COLLE A conforme à l'invention (20 % dudit amidon remplacé par l'ADJUVANT A) et ce, pour un dosage de colle constant (0,05 % en poids/plâtre).

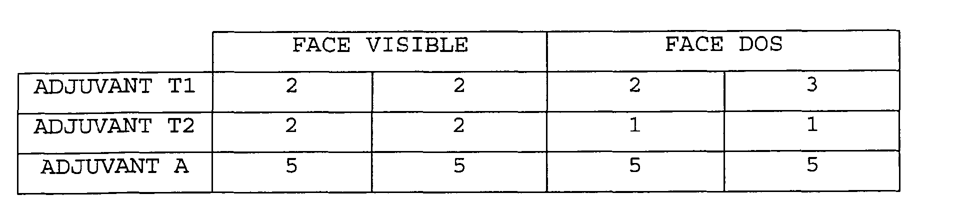

On voit que le PRODUIT A est non seulement beaucoup plus efficace que le PRODUIT T2 mais qu'il permet, contre toute attente, en substitution de seulement 20 % en poids de l'amidon de maïs fluidifié, d'obtenir un collage entre le papier et le plâtre particulièrement performant à un dosage aussi faible.

Et il est de plus remarquable de souligner que l'amélioration drastique du pouvoir collant obtenu de par la mise en oeuvre du PRODUIT A se manifeste avec la même intensité (note obtenue : 5) sur chacune des deux faces de la plaque de plâtre.

### EXEMPLE 4

Dans le cadre de cet exemple, on a étudié les possibilités d'utilisation du PRODUIT A susmentionné comme agent liant en vue de la granulation d'argile, en l'occurrence de bentonite ACTICOL® commercialisé par CONTINENTALE PARQUER.

Les essais de granulation ont été réalisés dans un mélangeur ROBOT-COUPE avec mise en oeuvre de 10 % en poids (sec/sec) de PRODUIT A par rapport à la bentonite. Le mélange contenait 10 % en poids d'eau. La composition obtenue a été séchée sur lit fluidisé AEROMATIC pendant 20 minutes à 90°C puis tamisée sur tamis de 500 et 2500 *µ*m. La fraction de composition granulée présentant une granulométrie comprise entre 500 et 2500 *µ*m a été étudiée en vue de tests d'absorption d'eau et d'abrasion.

Les tests d'absorption d'eau ont globalement montré que la bentonite granulée en présence de PRODUIT A présentait non seulement une vitesse d'hydratation mais aussi une capacité finale d'absorption, supérieures à la même bentonite :
- soit granulée uniquement en présence d'eau,
- soit granulée en présence de sucres hydrogénés tels que sorbitol et/ou maltitol.

Les tests d'abrasion ont en outre permis d'observer que le rendement de granulation, i.e. le taux de récupération des particules de taille comprise entre 500 et 2500 *µ*m, était amélioré de par la mise en oeuvre du PRODUIT A en regard de bentonite granulée en présence d'eau uniquement ou de certains sucres hydrogénés.

Les mêmes conclusions ont pu être faites de par l'utilisation, comme agent liant de bentonite, d'un autre polysaccharide sélectionné selon l'invention, en l'occurrence le PRODUIT E présentant les caractéristiques suivantes : Mw = 5390 g/mole ; BR = 23 % ; MN = 3070 g/mole et IP = 1,75.

Par ailleurs, le dit PRODUIT E a été utilisé avantageusement comme agent liant de carbonate de sodium léger en vue de la préparation de granules d'anti-mousse destinés à être incorporés dans des compositions lessivielles.

## Revendications

1. Utilisation, pour l'adjuvantation de matières minérales, d'un polysaccharide **caractérisé par** :
- une masse moléculaire moyenne en poids « MW » au moins égale à 500 g/mole et au plus égale à 9000 g/mole, notamment comprise entre 700 et 7000 g/mole, et
- un taux de branchement « BR » au moins égal à 10 %, notamment compris entre 10 et 40 %.

2. Utilisation selon la revendication 1,
**caractérisée en ce que** ledit polysaccharide présente :
- une masse moléculaire moyenne en poids « MW », comprise entre 1000 et 6000 g/mole, et
- un taux de branchement « BR » compris entre 12 et 30 %.

3. Utilisation selon la revendication 2,
**caractérisée en ce que** ledit polysaccharide présente :
- une masse moléculaire moyenne en poids « Mw », comprise entre 1500 et 5500 g/mole, et/ou
- un taux de branchement « BR » compris entre 15 et 25 %.

4. Utilisation selon l'une quelconque des revendications 1 à 3, **caractérisée en ce que** ledit polysaccharide présente un indice de polymolécularité « IP » au plus égal à 4, de préférence compris entre 1,5 et 4.

5. Utilisation selon l'une quelconque des revendications 1 à 4, dans le domaine des liants minéraux, en particulier des ciments, coulis, mortiers et bétons, dans le domaine du forage, dans le domaine des tuiles et briques, dans le domaine de la fonderie et des matériaux agglomérés ou granulés, dans le domaine des plaques de plâtre, dans le domaine des dispersions minérales et des poudres minérales ou dans le domaine des compositions absorbantes à base d'argile.

6. Utilisation selon l'une quelconque des revendications 1 à 5, **caractérisée en ce que** l'on utilise, simultanément ou non aux dits polysaccharides, au moins un autre adjuvant choisi parmi les agents améliorants de résistance, les agents de mouture ou auxiliaires de broyages, les plastifiants, les réducteurs d'eau-plastifiants, les super-plastifiants, les accélérateurs de prise, les entraîneurs d'air, les hydrofuges de masse, les produits de cure et leurs mélanges.

7. Utilisation selon la revendication 6,
**caractérisée en ce que** l'on utilise simultanément lesdits polysaccharides et ledit autre adjuvant, notamment par le biais d'une composition unique contenant pour le moins ces deux produits.

8. Utilisation selon l'une quelconque des revendications 6 et 7, **caractérisée en ce que** ledit autre adjuvant est choisi parmi les adjuvants de nature saccharidique, les adjuvants boratés, aminés, cétoniques, polyhydroxyliques, monocarboxyliques, polycarboxyliques et polyphosphoniques de nature non saccharidique et leurs mélanges quelconques, en particulier choisi parmi les monosaccharides, éventuellement hydrogénés ou oxydés, les disaccharides, éventuellement hydrogénés ou oxydés, l'acide lactique et ses sels, l'acide acétique et ses sels, la glycérine, les lignosulfonates, les éthanolamines, le borax, les polymères et copolymères à base d'acide acrylique, méthacrylique et/ou maléique et leurs sels, éthers ou esters, et/ou à base de styrène, ainsi que leurs mélanges.

9. Adjuvant pour matière minérale, en particulier pour liant minéral, **caractérisé en ce qu'**il contient :
- au moins un composant A constitué d'un polysaccharide présentant une masse moléculaire moyenne en poids « MW » au moins égale à 500 g/mole et au plus égale à 9000 g/mole et un taux de branchement « BR » au moins égal à 10 %, notamment compris entre 10 et 40 %, et
- au moins un composant B choisi parmi les monosaccharides, éventuellement hydrogénés ou oxydés, les disaccharides, éventuellement hydrogénés ou oxydés, l'acide lactique et ses sels, l'acide acétique et ses sels, la glycérine, les lignosulfonates, les éthanolamines, les polymères et copolymères à base d'acide acrylique, méthacrylique et/ou maléique, leurs sels, éthers ou esters, et les polymères ou copolymères à base de styrène.

10. Polysaccharide utilisé selon l'une quelconque des revendications 1 à 8 ou adjuvant selon la revendication 9, **caractérisé en ce qu'**il présente une matière sèche (MS) comprise entre 20 et 70 %.
